(19) Europäisches Patentamt
European Patent Office
Office européen des brevets

(11) **EP 3 264 208 B1**

(12) **EUROPÄISCHE PATENTSCHRIFT**

(45) Veröffentlichungstag und Bekanntmachung des Hinweises auf die Patenterteilung:
**06.01.2021 Patentblatt 2021/01**

(51) Int Cl.:
***G05B 19/418*** *(2006.01)*     ***G05B 19/042*** *(2006.01)*
***G06F 16/17*** *(2019.01)*

(21) Anmeldenummer: **16177236.3**

(22) Anmeldetag: **30.06.2016**

(54) **VERFAHREN ZUM AKTUALISIEREN VON PROZESSOBJEKTEN IN EINEM ENGINEERINGS-SYSTEM**

METHOD FOR UPDATING PROCESS OBJECTS IN AN ENGINEERING SYSTEM

PROCEDE D'ACTUALISATION D'OBJETS DE PROCESSUS DANS UN SYSTEME D'INGENIERIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**03.01.2018 Patentblatt 2018/01**

(73) Patentinhaber: **Siemens Aktiengesellschaft
80333 München (DE)**

(72) Erfinder:
• **Lutz, Benjamin
76327 Pfinztal (DE)**
• **Palmin, Anna
76187 Karlsruhe (DE)**

(56) Entgegenhaltungen:
**EP-A2- 1 868 055**

EP 3 264 208 B1

## Beschreibung

Die Erfindung betrifft ein Verfahren zum Aktualisieren von Prozessobjekten eines in einem Engineerings-System hinterlegten Automatisierungsprojektes, wobei mittels des Engineerings-Systems eine Automatisierungseinrichtung zur Steuerung eines technischen Prozesses projektierbar und/oder konfigurierbar ist und wobei ferner mittels eines Operator-Systems der zu steuernde technische Prozess bedien- und beobachtbar ist. Ferner betrifft die Erfindung eine Anordnung zur Durchführung des Verfahrens.

Aus der Siemens-Broschüre "Das Prozessleitsystem SIMATIC PCS 7", 2016 ist ein Engineering-System bekannt, das zum Erstellen eines Automatisierungsprojektes vorgesehen ist, wobei mittels des Engineering-Systems Automatisierungskomponenten zur Steuerung eines technischen Prozesses bzw. zur Lösung einer Automatisierungsaufgabe projektier-, konfigurier-, und parametrierbar sind. Das Engineering-System ermöglicht z. B. ein Engineering von Netzwerk-, Kommunikations- oder sonstigen Hardware-Komponenten sowie ein Engineering von Software-Komponenten. Derartige Software-Komponenten sind beispielsweise so genannte CFCs ("Continuous Function Charts), welche Bausteine für die Automatisierung einzelner Anlagenteile sowie Messstellen, z. B. Messstellen in Form von Reglern, verwirklichen bzw. repräsentieren. Nachdem ein Anwender nach Maßgabe der zu lösenden Steueraufgabe alle Funktionen in einem CFC-Funktionsplan erstellt hat, erzeugt das Engineering-System aus diesem CFC-Plan Automatisierungsobjekte bzw. CFC-Funktionen, welche in ein oder mehrere Automatisierungsgeräte geladen und dort im Rahmen der Steuerung eines technischen Prozesses bzw. zur Lösung der Automatisierungsaufgabe verarbeitet werden. Im Folgenden werden der Einfachheit halber sowohl die CFC-Bausteine als auch die mit diesen Bausteinen in Wirkverbindung stehenden und in das Automatisierungsgerät geladenen Automatisierungsobjekte als Prozessobjekt bezeichnet. Aus der genannten Siemens-Broschüre ist ferner ein Operator-System bekannt, welches einem Operator eine komfortable und sichere Prozessbeobachtung und Prozessführung ermöglicht; der Operator kann bei Bedarf in den Prozessablauf steuernd eingreifen, was bedeutet, dass der Operator den zu steuernden technischen Prozess bedienen und beobachten kann.

Es kann nun vorkommen, dass der Operator am OS-Client der Operator-Station während der Steuerung des Prozesses, d. h. zur Laufzeit (Run-Time) der Automatisierung, in den laufenden Prozess eingreift, indem der Operator beispielsweise einen Parameter, z. B. einen Grenzwert, eines in einem der Automatisierungsgeräte hinterlegten Regler-Bausteins ändert. Diese Änderung wird über den OS-Server der Operator-Station in das Automatisierungsgerät geladen. Für den Fall, dass das Engineering-System erneut die Automatisierungsobjekte bzw. CFC-Funktionen in das Automatisierungsgerät lädt, weil beispielsweise die CPU dieses Automatisierungsgerätes ausgetauscht wird und das Automatisierungsprojekt neu geladen werden muss, wird die durch den Operator zur Laufzeit vorgenommene Änderung im Automatisierungsgerät überschrieben, was bedeutet, dass das zur Laufzeit geänderte Prozessobjekt verloren geht und wieder durch das ursprünglich im Engineering erstellte Prozessobjekt ersetzt wird.

Aus der EP 1 868 055 A2 ist Verfahren zur sicheren und geschützten Kommunikation eines Prozesssteuerungsnetzwerks bekannt.

Der Erfindung liegt daher die Aufgabe zugrunde, ein Verfahren der eingangs genannten Art anzugeben, welches derartige Nachteile vermeidet. Darüber hinaus ist eine Anordnung zu schaffen, welche zur Durchführung des Verfahrens geeignet ist.

Diese Aufgabe wird im Hinblick auf das Verfahren durch die im kennzeichnenden Teil des Anspruchs 1 angegebenen, bezüglich der Anordnung durch die im kennzeichnenden Teil des Anspruchs 5 angegebenen Maßnahmen gelöst.

Vorteilhaft ist, dass während der Laufzeit vorgenommene Änderungen an Prozessobjekten nicht verloren gehen, sondern gesichert und automatisch in das Engineering-System "eingepflegt" bzw. "nachgezogen" werden, was im Folgenden auch als "Rückannotation bezeichnet wird. Das Engineering-System braucht nicht ständig mit online geschaltet zu sein, weil die Änderungen im Archiv-Server hinterlegt sind. Sobald das Engineering-System mit dem Archiv-Server verbunden ist, werden Änderungen automatisch in das Engineering-System übertragen. Durch die Integritätsprüfung des Integritätsmerkmals (beispielsweise eine Checksumme oder eine digitale Signatur), wird sichergestellt, dass jede zur Laufzeit vorgenommene unberechtigte Manipulation, durch die - bei einem erneuten Laden der Prozessobjekte in das Automatisierungsgerät - das Automatisierungsgerät in einen unzulässigen Zustand gebracht werden könnte, vermieden wird. Ferner wird im Rahmen der Prüfung durch den Abgleich mit den im System konfigurierten Benutzern und deren Rechten geprüft, ob der Benutzer, der die Änderung ausgelöst hat, überhaupt dazu berechtigt war, eine derartige Änderung zu bewerkstelligen. Dadurch wird sichergestellt, dass jede durch einen nicht dazu berechtigten Benutzer vorgenommene Änderung sofort erkannt und abgelehnt wird, was bedeutet, dass eine derartige Änderung durch das Engineering-System nicht (in das Automatisierungsprojekt) übernommen wird.

Mittels des Operator-Systems wird der Bedienalarm um einen ein Markeralarm ergänzt, der eine Gruppierung von Änderungen anzeigt. Dadurch können mehrere chronologische Änderungen, beispielsweise eine Reihe von Parameteranpassungen verschiedener Prozessobjekte zur Optimierung von Teilprozessen, zusammengefasst werden.

In einer Ausgestaltung der Erfindung wird dem Archiv-Server eine in das Automatisierungsprojekt übernommene Änderung vom Engineering-System quittiert. Dadurch wird sichergestellt, dass der Archiv-Server dem Engineerings-System die Änderung nicht weiter zum Einlesen bereitstellt.

In einer besonderen Ausgestaltung der Erfindung wird dem Operator-System eine nicht in das Automatisierungsprojekt übernommene Änderung mittels des Archiv-Servers angezeigt. Dies weist darauf hin, dass das Engineering-System nicht online geschaltet ist oder dass das Ergebnis der Integritätsprüfung oder des Abgleichs eine Übernahme der Änderung verhinderte.

In einer weiteren besonderen Ausgestaltung der Erfindung werden sowohl in das Automatisierungsprojekt übernommene als auch in das Automatisierungsprojekt nicht übernommene Änderungen in einem SIEM (Security Information and Event Management)-System hinterlegt. Derartige Maßnahmen ermöglichen eine zeitnahe und angemessene Reaktion auf festgestellte Abweichungen/Richtlinienverletzungen sowie die Mitberücksichtigung der Events im Rahmen einer "forensischen" Auswertung. Eine mögliche Reaktion auf einen festgestellten Versuch eine unberechtigte Änderung durchzuführen oder auf eine festgestellte Inkonsistenz kann beispielsweise sein, dass ein Anlagenadministrator und/oder Security-Experte über das SIEM-System umgehend darüber informiert werden. Ferner ist es auch möglich, die Reaktionen voll zu automatisieren.

Für den Fall, dass ein Operator während der Laufzeit der Automatisierungsrichtung durch eine entsprechende Eingabe an einem OS-Client eines Operator-Systems eine Änderung an einem Prozessobjekt bewerkstelligt - im Folgenden auch als eine engineering-relevante Eingabe bezeichnet - so wird diese Eingabe über das Prozessabbild in einem OS-Server des Operator-Systems einem Automatisierungsgerät angezeigt. Eine derartige Eingabe, z. B. die Änderung bzw. die Verstellung eines Parameters eines Reglers, erzeugt zusätzlich zum Einschreiben in das Prozessabbild einen Alarm in Form eines Bedien-Alarms, wobei dieser Bedien-Alarm die Änderung sowie benutzer-, aktionsund/oder prozessobjektbezogene (Begleit)Werte umfasst. Der Bedien-Alarm, der zum Schutz vor unberechtigten Operator-Eingaben vorgesehen ist, kann beispielsweise mit folgenden Begleitwerten versehen sein:

- Anwendername, Claim (UMC) ... (wer hat die Aktion ausgelöst?),
- Zeitstempel (wann wurde die Aktion ausgelöst?),
- Prozessobjekt-Kennung, Member-Kennung ... ,
- Ort (wo bzw. auf welchen Bereich der Anlage bzw. auf welches Objekt bezog sich die ausgelöste Aktion, Area, ... Teilanlage, Equipment Modul).

Neben den benutzer-, aktions- und/oder prozessobjektbezogene (Begleit)Werten umfasst der Bedienalarm ein Integritätsmerkmal "$Sig_A$ zum Alarm A" zum Schutz des Bedienalarm A gegen unbemerkte Manipulation, wobei das Integritätsmerkmal wird wie folgendermaßen generiert werden kann:

$$- \quad Sig_A = Sig\_Gen(A),$$

$$- \quad A = A \| Sig_A,$$

wobei

- Sig Gen ein Signaturgenerierungsverfahren (z.B. basierend auf den sogenannte elliptischen Kurven oder RSA) ist und
- das Zeichen "||" die Konkatenation bedeutet.

Das Engineering-System kann durch die Verifikation von $Sig_A$ unter Verwendung eines dem Signaturgenerierungsverfahren entsprechenden Signaturverifikationsverfahrens (Sig_Ver) jederzeit prüfen, ob der Alarm A manipuliert wurde. Falls das Ergebnis des Signaturverifikation "false" ist, deutet dies auf einen manipulierten Alarm A hin.

Mittels des Engineering-Systems wird ferner ein entsprechendes "Security Event" generiert. Dieses "Security Event" umfasst die in dem Alarm enthaltenen Informationen und kann weitere Informationen - vorzugsweise netzwerkspezifische Informationen - beinhalten, wobei das "Security Event" in einem lokalen Eventspeicher abgelegt wird ggf. an eine dedizierte zentrale Instanz (z. B. an ein SIEM-System) übermittelt wird. Dadurch werden eine Erkennung von Angriffen und Abweichungen zur Laufzeit sowie die Mitberücksichtigung dieses Events bei einer späteren forensischen Auswertung ermöglicht.

Damit z. B. mehrere chronologische engineering-relevanten Eingaben zusammengefasst werden können (beispielsweise eine Reihe von Parameteranpassungen verschiedener Prozessobjekte zur Optimierung eines Teilprozesses), sind ferner Marker-Alarme vorgesehen. Nachdem der Operator alle chronologischen engineering-relevanten Änderungen eingegeben hat, erzeugt der OS-Server der Operator-Station eine Marker-Meldung bzw. einen Marker-Alarm, der z. B. beschreibt, was mit den letzten Engineering-relevanten Eingaben bezweckt wurde. Alle Meldungen zwischen zwei Markern stellen einen Abschnitt dar. Derartige Abschnitte sind vorteilhaft, falls im Engineering z. B. ein "Rollback" gemacht wird ("Mache die Optimierung des Teilprozesses A im Abschnitt 334 zwischen Marker Optimierung 1 und Optimierung 2 rückgängig). Zur Integritätssicherung der zwischen den zwei Marker M1 und M2 eingeschlossenen Abschnitte wird der Marker M2, der das Ende des Abschnittes kennzeichnet, mit einem Integritätsmerkmal $Sig_{M2}$ (in Form eines separaten Begleitwerts) ergänzt. Das Integritätsmerkmal $Sig_{M2}$ kann folgendermaßen generiert werden:

$$Sig_{M2} = Sig\_Gen(M1\|E1\|E2\|...\|En\|M2),$$

$$M2 = M2\|SigM2$$

wobei

- Sig_Gen ein Signaturgenerierungsverfahren (z.B. basierend auf den sog. Elliptischen Kurven oder RSA) ist
- $E_i$, i=1 bis i =n, die zwischen den Marker-Alarmen M1 und M2 eingeschlossenen einzelnen Eingaben sind und
- das Zeichen "$\|$" die Konkatenation bedeutet.

Auch hier kann durch die Verifikation von $Sig_{M2}$ unter Verwendung des dem Signaturgenerierungsverfahren entsprechenden Signaturverifikationsverfahrens (Sig_Ver) jederzeit geprüft werden, ob der Marker M2 bzw. die zwischen M1 und M2 eingeschlossenen Eingaben manipuliert wurden. Falls das Ergebnis des Signaturverifikation "false" ist, deutet dies auf einen manipulierten Marker-Alarm M bzw. auf eine Manipulation eines oder mehrere Eingaben innerhalb des zugehörigen Abschnittes hin. Die Signaturgenerierung auf dem OS-Server der Operator-Station erfolgt unter Verwendung eines sogenannten Private Key, der sicher aufbewahrt wird. Der zugehörige Public Key, der für die Signaturverifikation benötigt wird, soll im Idealfall als Bestandteil eines zugehörigen kryptographischen Zertifikats durch eine projektspezifische oder anlagenweite "Certification Authority" als Bestandteil einer "Public Key Infrastructur (PKI)" bereitgestellt werden.

Das Engineering-System braucht nicht ständig online geschaltet zu sein, weil die Änderungen im Archiv-Server hinterlegt sind. Sobald das Engineering-System mit dem Archiv-Server verbunden ist, wird durch das Engineering-System dem Archiv-Server eine Anfrage für die Bedien- und Marker-Alarme übermittelt, dessen Erhalt das Engineering-System bislang noch nicht bestätigt hat. Die noch nicht bestätigten Alarme liest das Engineering-System ein, wobei das das Engineering-System die Alarme interpretiert und prüft. Dazu sind folgende Schritte vorgesehen:

a) zunächst wird durch die Verifikation des Integritätsmerkmals (unter Verwendung des Verifikationsverfahrens Sig_Ver) geprüft, ob der/die Bedien- und Marker-Alarme nicht manipuliert wurden.
b) anschließend wird geprüft, ob der Operator überhaupt entsprechende Rechte hatte, die vorgenommenen Änderungen an den Prozessobjekten durchzuführen, wodurch insbesondere unberechtigte Änderungen ausgeschlossen werden. Dazu werden benutzer-, aktions- und/oder prozessobjektbezogene Werte mit den im Engineering-System hinterlegten, vorgegebenen Werten abgeglichen,
c) optional kann - um die Operator-Rechteprüfung zu verbessern - zusätzlich das Engineering-System die Änderung dekodieren und online mit dem entsprechenden Prozessobjekt des Automatisierungsgerätes vergleichen bzw. verifizieren,
d) die Änderung wird im Engineering-System durchgeführt und dem Archiv-Server quittiert,
e) bei Inkonsistenzen, beispielsweise aufgrund unterschiedlicher Parameter oder weil das Prozessobjekt im Engineering-System nicht mehr vorhanden ist, wird eine entsprechende Meldung (grafischer Dialog) auf dem OS-Client der Operator-Station ausgegeben, so dass der Projekteuer entsprechend handeln kann. Wird die Änderung "verworfen", so wird diese "Verwerfung" auch in den Archiv-Server hinterlegt.

Die Ergebnisse der Durchführung der Schritte a) bis e), insbesondere die Ergebnisse der durchgeführten Prüfungen, werden auf entsprechende Security Events abgebildet, die an eine dedizierte zentrale Instanz, z.B. eine zentrale Instanz in Form eines SIEM(Security Information and Event Management)-Systems, übermittelt werden können. Dadurch wird insbesondere eine angemessene Reaktion auf derartige Abweichungen und/oder Richtlinienverletzungen ermöglicht.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen

Figur 1    ein Prozessleitsystem,
Figur 2    ein Sequenzdiagramm und
Figur 3    der Aufbau eines Alarms.

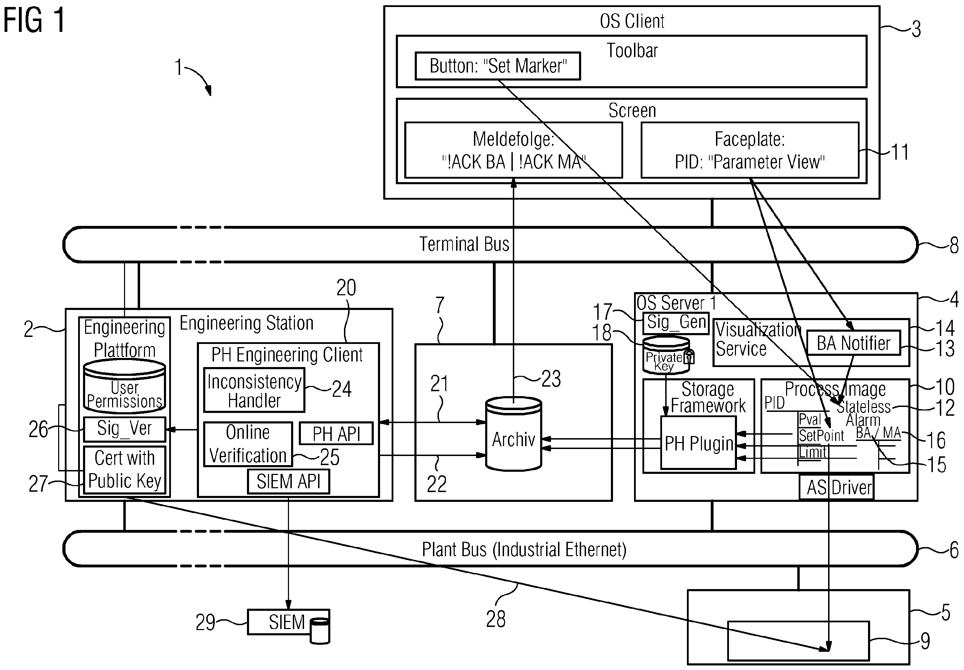

Die in den Figuren 1 bis 3 dargestellten gleichen Teile sind mit gleichen Bezugszeichen versehen.

In Figur 1 sind mit 1 Bestandteile eines Prozessleitsystems bezeichnet, das ein Engineering-System 2, ein mit einem OS-Client 3 und einem OS-Server 4 versehenen Operator-System sowie eine Vielzahl von Automatisierungskomponenten einer Automatisierungseinrichtung umfasst. Im vorliegenden Ausführungsbeispiel ist der Einfachheit und der besseren Übersicht halber lediglich eine Automatisierungskomponente in Form eines Automatisierungsgerätes 5 dargestellt. Selbstverständlich umfasst die Automatisierungseinrichtung zur Steuerung einer Anlage bzw. eines technischen Prozesses eine Vielzahl von Automatisierungskomponenten, beispielsweise eine Vielzahl von Automatisierungsgeräten, eine Vielzahl von dezentralen Peripherien, welche über einen Feldbus mit den Automatisierungsgeräten verbunden sind. Die Automatisierungsgeräte und die dezentralen Peripherien weisen intelligente CPU- und/oder Interface-Baugruppen sowie eine Vielzahl von Prozesseingabe- und Prozessausgabe-Baugruppen auf, wobei an die jeweiligen Prozesseingabe-Baugruppen Sensoren und an die jeweiligen Prozessausgabe-Baugruppen Aktuatoren angeschlossen sind. Das Automatisierungsgerät 5, die hier nicht dargestellten weiteren Automatisierungsgeräte und dezentralen Peripherien sowie das Engineering-System 2 und der OS-Server 4 sind an einen Anlagenbus 6 angeschlossen, wobei ferner das Engineering-System 2, das Operator-System 3, 4 und ein Archiv-Server 7 über einen Terminal-Bus 8 miteinander verbunden sind.

Mittel des Engineering-Systems 2 erstellt ein Projekteur ein Automatisierungsprojekt entsprechend einer zu lösenden Automatisierungsaufgabe, wobei der Projekteur die Automatisierungseinrichtung mittels einer geeigneten Software des Engineering-Systems 2 projektiert, konfiguriert und parametriert. Im vorliegenden Beispiel wird angenommen, dass ein entsprechend projektiertes, konfiguriertes und parametriertes Prozessobjekt in Form eines Regler-Bausteins 9 im Automatisierungsgerät 5 hinterlegt ist, der während der Prozesssteuerung mittels einer CPU des Automatisierungsgerätes 5 verarbeitet wird.

Das Operator-System 3, 4 ermöglicht einem Operator eine komfortable und sichere Prozessbeobachtung und Prozessführung, wobei der Operator bei Bedarf in den Prozessablauf steuernd eingreifen kann, was bedeutet, dass der Operator im vorliegenden Beispiel den durch das Automatisierungsgerät 5 abzuarbeitenden Regler-Baustein 9 "bedienen und beobachten" kann. Der Operator greift dazu mittels des OS-Clients 3 auf eine im OS-Server hinterlegte Bedien- und Beobachtungs-Software zu, die derart ausgebildet ist, lesend und/oder schreibend auf ein im OS-Server 4 hinterlegtes Prozessabbild 10 zugreifen zu können, um beispielsweise Parameter (Grenzwerte, Sollwerte, ...) des Regler-Bausteins 9 zu ändern bzw. zu beeinflussen.

Im Folgenden wird angenommen, dass der Operator während des Run-Betriebs des Automatisierungsgerätes 5 über ein Faceplate 11 des OS-Clients 3 einen Parameter im Regler-Baustein 9 ändert. Um diese Änderung auch in das Automatisierungsprojekt des Engineering-Systems 2 "einzupflegen", um dadurch den Regler-Baustein 9 im Automatisierungsprojekt zu aktualisieren, weist das Prozessabbild 10 einen so genannten zustandslosen Alarm 12 (stateless alarm) auf, in welchen aufgrund der Parameteränderung ein BA-Notifier 13 eines Visualization Service 14 der Bedien- und Beobachtungs-Software des OS-Servers 4 einen Bedienalarm 15 und einen Marker-Alarm 16 erzeugt und in das Prozessbild 10 einschreibt. Der Marker-Alarm 16 wird nur dann erzeugt, falls der Operator diesen zur Strukturierung "logisch" zusammenhängender Bedien-Alarme über einen Button und einen entsprechenden Dialog in der grafischen Bedienoberfläche des OS-Clients 3 ausgelöst hat.

Der OS-Server 4 weist Signierungsmittel auf, welche den Bedien- und Markeralarm 15, 16 mit einem Integritätsmerkmal in Form einer digitalen Signatur versehen, wobei auf dem OS-Server 4 ein Signaturgenerierungsverfahren 17 - Sig_Gen - und ein zur Signaturgenerierung benötigter Private Key 19 bereitgestellt werden. Der Private Key wird selbstverständlich vertraulich aufbewahrt, so dass er nicht kompromittiert werden kann. Mittels eines derartigen Integritätsmerkmals werden der Bedien- und Markeralarm 15, 16 vor unberechtigten Manipulationen geschützt. Die Aufbewahrung kann mittels einer hochsicheren Datenbank verwirklicht werden. Zusätzlich zu diesem Integritätsmerkmal werden dem Bedien- und Markeralarm 15, 16 benutzer-, aktions- und/oder prozessobjektbezogene Werte zum Schutz vor unberechtigten Änderungen an dem Regler-Baustein zugeordnet, beispielsweise Begleitwerten in Form eines Operatornamens (wer hat die Änderung bzw. Aktion ausgelöst?), eines Zeitstempels (wann wurde die Änderung bzw. Aktion ausgelöst?) und/oder einer Regler-Kennung. Der mit dem Integritätsmerkmal und mit Begleitwerten versehenen Bedien- und Markeralarm 15, 16 wird über ein Storage Framework 19 des OS-Servers 4 dem Archiv-Server 7 zugeführt und dort archiviert.

Um auf dem Archiv-Server hinterlegte Parameteränderung in das Engineering-System 2 zu einem beliebigen Zeitpunkt zu übertragen und die Änderung dort in das Automatisierungsprojekt zu übernehmen - damit die zur Laufzeit vorgenommene Änderung nicht beim nächsten Herunterladen des Automatisierungsprojektes von der Engineering-System 2 in das Automatisierungsgerät 5 nicht verloren geht - weist das Engineering-System 2 eine Software-Komponente PH Engineering Client 20. Diese ist dazu ausgebildet, Abfragen im Archiv-Server 7 durchzuführen, um die zur Laufzeit vorgenommene Änderung (engineeringrelevantes Datum) in Form des Bedien- und Markeralarms 15, 16 auszulesen und das Auslesen zu quittieren (Doppelpfeil 21). Für den Fall, dass das Engineering-System 2 die Änderung in das Automatisierungsprojekt übernommen hat, quittiert der PH Engineering Client 20 die Übernahme (Pfeil 22), wodurch vermieden wird, dass der Bedien- und Markeralarm 15, 16 zu einem späteren Zeitpunkt erneut eingelesen wird.

Ob die Änderung bereits vom Engineering-System 2 übernommen wurde, zeigt der Archiv-Server 2 dem OS-Client 3 und somit dem Operator an. Dazu übermittelt der Archiv-Server 7 dem OS-Client 3 eine Meldefolge 23, welche vom Engineering-System 2 noch nicht quittierte Änderungen umfasst. Mittels dieser Meldefolgeanzeige ist eine grafische Darstellung der nicht quittierten Bedien- und Marker-Alarme möglich.

Der PH Engineering Client 20 umfasst ferner zwei weitere Software-Komponenten 24, 25 (Inconsistency Handler und Online Verification), die beim Einlesen der Änderung (des engineering-relevanten Datums) in das Engineering-System 2 für folgende Maßnahmen bewerkstelligen:

(1) Die Software-Komponente 24 (Inconsistency Handler) prüft durch die Verifikation des Integritätsmerkmals (unter Verwendung des Verifikationsverfahrens 26 - Sig_Ver - und den ihm zur Verfügung stehenden Public Key 27), ob der Bedien- und Marker-Alarm 15, 16 nicht manipuliert wurde.

(2) Anschließend prüft die Software-Komponente 25 durch Abgleich der benutzer-, aktions- und/oder prozessobjektbezogene Werte des Bedienalarms 15 mit den im Engineering-System 2 hinterlegten, vorgegebenen Werten; im Engineering-System 2 sind die Benutzern samt deren Berechtigungen hinterlegt, wodurch geprüft werden kann, ob der Operator überhaupt entsprechende Rechte hat, den Parameter zu ändern. Dadurch werden unberechtigte Änderungen ausgeschlossen.

(3) Um die Operator-Rechteprüfung zu verbessern, kann optional das Engineering-System zusätzlich die Änderung dekodieren und online mit dem entsprechenden Regler-Baustein 19 des Automatisierungsgerätes 5 vergleichen bzw. verifizieren (Pfeil 28).

(4) Für den Fall, dass die Ergebnisse der Verifikation und des Abgleichs konsistent sind, wird die Änderung in das Automatisierungsprojekt im Engineering-System 2 übernommen und dem Archiv-Server 7 quittiert (Pfeil 22).

(5) Sind dagegen die Ergebnisse widersprüchlich bzw. inkonsistent, wird die Änderung nicht in das Automatisierungsprojekt übernommen, wobei die verworfene Änderung dem Operator angezeigt wird (Pfeil 23).

Wie bereits erläutert werden die Ergebnisse der Durchführung der Schritte (1) bis (5), insbesondere die Ergebnisse der durchgeführten Prüfungen, auf entsprechende Security Events abgebildet, die an ein SIEM(Security Information and Event Management)-System 29 übermittelt werden. Dadurch wird insbesondere eine angemessene Reaktion auf derartige Abweichungen und/oder Richtlinienverletzungen ermöglicht.

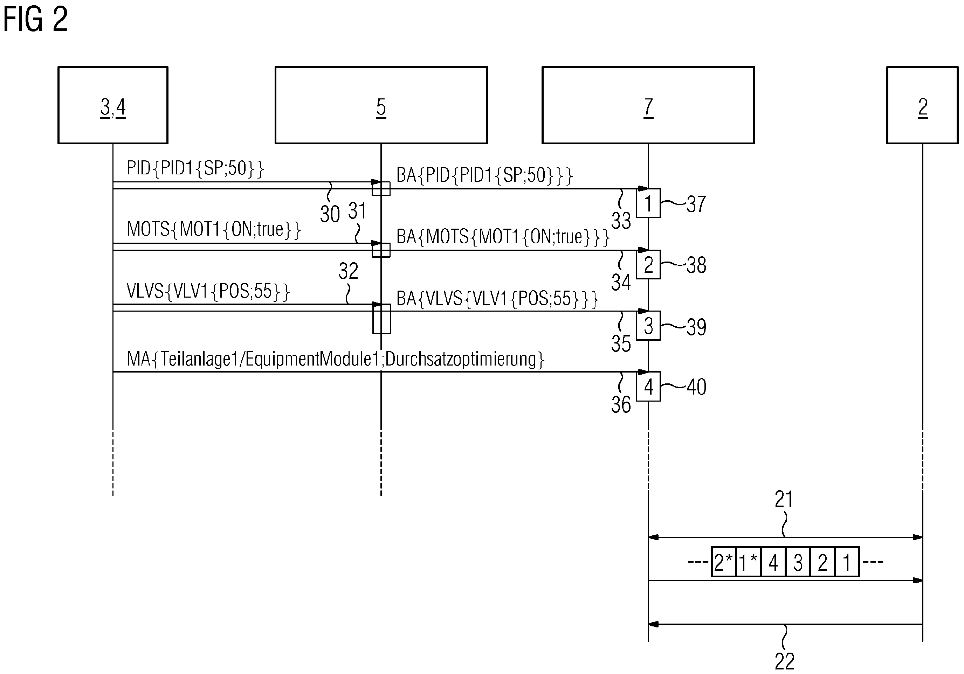

Im Folgenden wird auf Figur 2 Bezug genommen. Diese zeigt ein exemplarisches Sequenzdiagramm von der Prozessoptimierung durch den Operator über den OS-Client 3 des Operator-Systems 3, 4 und des Automatisierungsgerätes 5, der Generierung und Archivierung von Bedien- und Markeralarme bis hin zur gesicherten und entkoppelten Aktualisierung (Rückannotation) der Parameteränderungen in das Engineering-System 2. Bei jeder relevanten Parameterveränderung des Prozesses (z.B. Änderung einer Default-Ventilstellung von VLVS) durch das Operator-System 3, 4 wird parallel der entsprechende Bedienalarm erzeugt, der als Begleitwerte alle Informationen (Prozessobjekt, Parameter, Wert) umfasst, um diese Änderung zu einem späteren Zeitpunkt aus dem Archiv-Server 7 in das Engineering-System 2 übertragen zu können. Im Rahmen der Optimierung, welche eine Vielzahl von Parameteränderungen beinhalten kann, kann der Operator einen Markeralarm erzeugen, der die vorgenommene Optimierung als Abschnitt markiert und als Information eine Beschreibung beinhaltet, welchen Hintergrund die Optimierung hatte. Der Schutz der Markeralarme und der zwischen zwei Marker-Alarmen eingeschlossenen Abschnitte gegen unbemerkte Manipulationen wird - wie beschrieben - durch die Generierung eines Integritätsmerkmals verwirklicht, in welchen ein Sequenzdiagramm und der Aufbau eines Alarms dargestellt sind.

Im vorliegenden Beispiel wird angenommen, dass ein Operator eine Parameteränderung an einem Regler-Baustein (PID), an einem Motoren-Baustein (MOT) und einem Ventil-Baustein (VLSV) vorgenommen hat, was in der Figur durch die Bezugszeichen 30 bis 32 verdeutlicht ist. Diese Änderungen werden dem Automatisierungsgerät 5 übermittelt und parallel dazu werden dem Archiv-Server 7 für jede Änderung ein Bedienalarm 33 bis 35 übermittelt, die im Archiv-Server 7 in Speicherbereichen 37 bis 39 hinterlegt werden. Ferner hat der Operator bis zu einem Zeitpunkt einen Markeralarm 36 erzeugt, der in einem Speicherbereich 40 des Archiv-Servers 7 hinterlegt wird. Zu einem späteren Zeitpunkt liest das Engineering-System 2 die Speicherbereiche 37 bis 40 und somit die Bedien- und Markeralarme aus und quittiert in der beschriebenen Art und Weise das Auslesen der Alarme sowie - für den Fall, dass die Änderungen in das Automatisierungsprojekt übernommen wurden - die Übernahme dieser Änderungen.

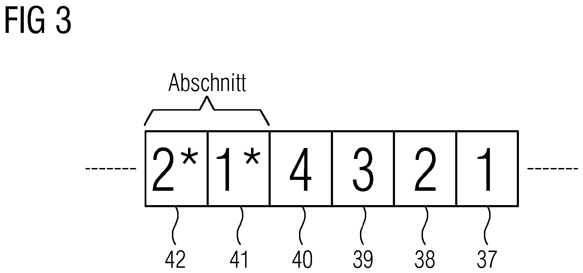

Figur 3 zeigt einen Ausschnitt des abschnittsweisen Aufbaus der engineering-relevanten Bedienalarme 37 bis 41 getrennt durch die Markeralarme 40, 42. Diese Markeralarme 40, 42 dienen nicht nur der Strukturierung, um zwischen verschiedenen Optimierungsvorgängen zur Laufzeit unterscheiden zu können, sondern auch dazu, im Engineering-System 2 die Möglichkeit von dedizierten Rollbacks einzelner Optimierungen zu schaffen. Um zu verhindern, dass eine Rückannotation von engineering-relevanten Daten aus dem Archiv-Server 7 in die Engineering-System 2 nicht mehrfach erfolgen kann, wird nach jedem Einlesen eines Abschnitts in das Engineering-System 2 eine Quittierung in den Archiv-Server 7 zurückgeschrieben.

**Patentansprüche**

1. Verfahren zum Aktualisieren von Prozessobjekten eines in einem Engineerings-System (2) hinterlegten Automatisierungsprojektes, wobei mittels des Engineerings-Systems (2) eine Automatisierungseinrichtung (5) zur Steuerung eines technischen Prozesses projektierbar und/oder konfigurierbar ist und wobei ferner mittels eines Operator-Systems (3, 4) der zu steuernde technische Prozess bedien- und beobachtbar ist, wobei für den Fall, dass während der Prozesssteuerung mittels des Operator-Systems (3, 4) eine Änderung an mindestens einem der Prozessobjekte bewerkstelligt wird,

   - ein Bedienalarm (15) mittels des Operator-Systems (3, 4) erzeugt und in einem Prozessabbild (10) des Operator-Systems (3, 4) hinterlegt wird, wobei dieser Bedienalarm (15) die Änderung sowie benutzer-, aktions- und/oder prozessobjektbezogene Werte zum Schutz vor unberechtigten Änderungen an dem mindestens einen Prozessobjekt und ein Integritätsmerkmal zum Schutz des Bedienalarms (15) vor Manipulationen umfasst,
   - der Bedienalarm (15) ferner einem Archiv-Server (7) zugeführt und hinterlegt wird,
   - mittels des Engineerings-Systems der Bedienalarm aus dem Archiv-Server ausgelesen wird,
   - mittels des Engineerings-Systems (2) das Integritätsmerkmal verifiziert wird und ferner mittels des Engineerings-Systems (2) die benutzer-, aktions- und/oder prozessobjektbezogene Werte mit im Engineering-System (2) hinterlegten, vorgegebenen Werten abgeglichen werden,
   - in Abhängigkeit der Ergebnisse der Verifikation und des Abgleichs die Änderung an dem mindestens einen Prozessobjekt mittels des Engineerings-Systems (2) in das Automatisierungsprojekt übernommen wird,

   **dadurch gekennzeichnet, dass** ferner mittels des Operator-Systems (3, 4) der Bedienalarm (15) um einen Markeralarm (16) ergänzt wird, der eine Gruppierung von Änderungen anzeigt.

2. Verfahren nach Anspruch 1, **dadurch gekennzeichnet, dass** dem Archiv-Server (7) eine in das Automatisierungsprojekt übernommene Änderung vom Engineering-System (2) quittiert wird.

3. Verfahren nach Anspruch 2, **dadurch gekennzeichnet, dass** einem OS-Client (3) des Operator-Systems (3, 4) eine nicht in das Automatisierungsprojekt übernommene Änderung mittels des Archiv-Servers (7) angezeigt wird.

4. Verfahren nach einem der Ansprüche 1 bis 3, **dadurch gekennzeichnet, dass** sowohl in das Automatisierungsprojekt übernommene als auch in das Automatisierungsprojekt nicht übernommene Änderungen in einem SIEM (Security Information and Event Management)-System (29) hinterlegt werden.

5. Anordnung mit einem Engineering-System (2) und einem Operator-System (3, 4), wobei in dem Engineerings-System (2) ein Prozessobjekte aufweisendes Automatisierungsprojekt hinterlegt ist und mittels des Engineerings-Systems (2) eine Automatisierungseinrichtung (5) zur Steuerung eines technischen Prozesses projektierbar und/oder konfigurierbar ist und wobei ferner mittels eines Operator-Systems (3, 4) der zu steuernde technische Prozess bedien- und beobachtbar ist, wobei zum Aktualisieren mindestens eines der Prozessobjekte im Automatisierungsprojekt für den Fall einer Änderung an dem mindestens einen Prozessobjekt,

   - das Operator-Systems (3, 4) dazu ausgebildet ist, ein Bedienalarm (15) zu erzeugen und in einem Prozessabbild (10) des Operator-Systems (3, 4) zu hinterlegen, wobei dieser Bedienalarm (15) die Änderung sowie benutzer- aktions- und/oder prozessobjektbezogene Werte zum Schutz vor unberechtigten Änderungen an dem mindestens einen Prozessobjekt und ein Integritätsmerkmal zum Schutz des Bedienalarms (15) vor Manipulationen umfasst,
   - das Operator-Systems (3, 4) ferner dazu ausgebildet ist, den Bedienalarm (15) ferner einem Archiv-Server (7) zuzuführen,
   - das Engineerings-Systems (2) dazu ausgebildet ist, den Bedienalarm (15) aus dem Archiv-Server (7) auszulesen,
- das Engineerings-Systems (2) ferner dazu ausgebildet ist, das Integritätsmerkmal zu verifizieren und die benutzer-, aktions- und/oder prozessobjektbezogene Werte mit im Engineering-System (2) hinterlegten, vorgegebenen Werten abzugleichen, wobei in Abhängigkeit der Ergebnisse der Verifikation und des Abgleichs das Engineerings-System (2) die Änderung an dem mindestens einen Prozessobjekt in das Automatisierungsprojekt übernimmt,

**dadurch gekennzeichnet, dass** das Operator-System (3, 4) dazu ausgebildet ist, den Bedienalarm (15) um einen Markeralarm (16) zu ergänzen, der eine Gruppierung von Änderungen anzeigt.

6. Anordnung nach Anspruch 5, **dadurch gekennzeichnet, dass** das Engineering-System (2) dazu ausgebildet ist, dem Archiv-Server (7) eine in das Automatisierungsprojekt übernommene Änderung zu quittieren.

7. Anordnung nach Anspruch 6, **dadurch gekennzeichnet, dass** der Archiv-Server (7) dazu ausgebildet ist, eine nicht in das Automatisierungsprojekt übernommene Änderung einem OS-Client (3) des Operator-Systems (3, 4) anzuzeigen.

8. Anordnung nach einem der Ansprüche 5 bis 7, **dadurch gekennzeichnet, dass** das Engineering-System (2) dazu ausgebildet ist, sowohl in das Automatisierungsprojekt übernommene als auch in das Automatisierungsprojekt nicht übernommene Änderungen in einem SIEM (Security Information and Event Management)-System (29) zu hinterlegen.

## Claims

1. Method for updating process objects of an automation project stored in an engineering system (2), wherein an automation device (5) can be designed and/or configured by means of the engineering system (2) in order to control a technical process and wherein, furthermore, the technical process to be controlled can be operated and monitored by means of an operator system (3, 4), wherein for the case where a change to at least one of the process objects is effected during the process control by means of the operator system (3, 4),

   - an operating alarm (15) is generated by means of the operator system (3, 4) and stored in a process image (10) of the operator system (3, 4), wherein this operating alarm (15) comprises the change as well as user-, action- and/or process object-based values in order to protect against unauthorised changes at the at least one process object and an integrity feature in order to protect the operating alarm (15) against manipulations,
   - the operating alarm (15) is also fed to an archive server (7) and stored,
   - the operating alarm is read from the archive server by means of the engineering system,
   - the integrity feature is verified by means of the engineering system (2) and, furthermore, the user-, action- and/or process object-based values are compared with predefined values stored in the engineering system (2) by means of the engineering system (2),
   - the change at the at least one process object is adopted in the automation project by means of the engineering system (2) as a function of the results of the verification and the comparison,

   **characterised in that**, furthermore, the operating alarm (15) is supplemented by a marker alarm (16) by means of the operator system (3, 4), which marker alarm signals a grouping of changes.

2. Method according to claim 1, **characterised in that** a change adopted in the automation project by the engineering system (2) is acknowledged by the archive server (7).

3. Method according to claim 2, **characterised in that** a change not adopted in the automation project is displayed by means of the archive servers (7) for an OS client (3) of the operator system (3, 4).

4. Method according to one of claims 1 to 3, **characterised in that** changes adopted in the automation project as well as changes not adopted in the automation project are stored in a SIEM (Security Information and Event Management) system (29).

5. Arrangement having an engineering system (2) and an operator system (3, 4), wherein an automation project having process objects is stored in the engineering system (2) and an automation device (5) can be designed and/or configured by means of the engineering system (2) in order to control a technical process and wherein, furthermore, the technical process to be controlled can be operated and monitored by means of an operator system (3, 4), wherein in order to update at least one of the process objects in the automation project for the case of a change to the at least one process object,

- the operator system (3, 4) is designed to generate an operating alarm (15) and store it in a process image (10) of the operator system (3, 4), wherein this operating alarm (15) comprises the change as well as user-, action- and/or process object-based values in order to protect against unauthorised changes at the at least one process object and an integrity feature in order to protect the operating alarm (15) against manipulations,
- the operator system (3, 4) is designed, moreover, to feed the operating alarm (15) furthermore to an archive server (7),
- the engineering system (2) is designed to read the operating alarm (15) from the archive server (7),
- the engineering system (2) is designed, moreover, to verify the integrity feature and compare the user-, action- and/or process object-based values with predefined values stored in the engineering system (2), wherein the engineering system (2) adopts the change to the at least one process object in the automation project as a function of the results of the verification and the comparison,

**characterised in that** the operator system (3, 4) is designed to supplement the operating alarm (15) by a marker alarm (16) which signals a grouping of changes.

6. Arrangement according to claim 5, **characterised in that** the engineering system (2) is designed to acknowledge a change adopted in the automation project by the archive server (7).

7. Arrangement according to claim 6, **characterised in that** the archive server (7) is designed to display a change not adopted in the automation project for an OS client (3) of the operator system (3, 4).

8. Arrangement according to one of claims 5 to 7, **characterised in that** the engineering system (2) is designed to store changes adopted in the automation project as well as changes not adopted in the automation project in a SIEM (Security Information and Event Management) system (29).

## Revendications

1. Procédé de mise à jour d'objets de processus d'un plan d'automatisation mis en mémoire dans un système (2) d'ingénierie, dans lequel, au moyen du système (2) d'ingénierie, on planifie ou on configure un dispositif (5) d'automatisation pour la commande d'un processus technique, et dans lequel, en outre, au moyen d'un système (3, 4) opérateur, le processus technique à commander peut être commandé et observé, dans lequel, dans le cas où, pendant la commande du processus au moyen du système (3, 4) opérateur, il s'effectue une variation d'au moins l'un des objets de processus,

- on produit une alerte (15) de commande au moyen du système (3, 4) opérateur et on la met en mémoire dans une représentation (10) de processus du système (3, 4) opérateur, dans lequel cette alerte (15) de commande comprend la modification, ainsi que des valeurs, rapportées à un utilisateur, à une action et/ou à un objet de processus, de protection vis-à-vis de modifications injustifiées du au moins un objet de processus et une caractéristique d'intégrité de protection de l'alerte (15) de commande vis-à-vis de manipulations ;
- on envoie l'alerte (15) de commande, en outre, à un serveur (7) d'archivage et on l'y met en mémoire,
- au moyen du système d'ingénierie, on lit l'alerte de commande dans le serveur d'archivage,
- au moyen du système (2) d'ingénierie, on vérifie la caractéristique d'intégrité et, en outre, au moyen du système (2) d'ingénierie, on égalise les valeurs rapportées à un utilisateur, à une action et/ou à un objet de processus, à des valeurs données à l'avance mises en mémoire dans le système (2) d'ingénierie,
- en fonction des résultats de la vérification et de l'égalisation, on effectue la modification du au moins un objet de processus au moyen du système (2) d'ingénierie dans le plan d'automatisation,

**caractérisé en ce qu'**en outre, au moyen du système (3, 4) opérateur, on complète l'alerte (15) de commande d'une alerte (16) de marqueur, qui indique un regroupement de modifications.

2. Procédé suivant la revendication 1, **caractérisé en ce qu'**il est accusé réception, par le système (2) d'ingénierie, au serveur (7) d'archivage, d'une modification prise en charge dans le plan d'automatisation.

**3.** Procédé suivant la revendication 2, **caractérisé en ce que** l'on indique, au moyen du serveur (7) d'archivage, au client (3) OS du système (3, 4) opérateur, une modification, qui n'est pas prise en charge dans le plan d'automatisation.

**4.** Procédé suivant l'une des revendications 1 à 3, **caractérisé en ce que** l'on met en mémoire, dans un système (29) SIEM (Security Information and Event Management), tant des modifications prises en charge dans le plan d'automatisation, qu'également non prises en charge dans le plan d'automatisation.

**5.** Agencement comprenant un système (2) d'ingénierie et un système (3, 4) opérateur, dans lequel il est mis en mémoire, dans le système (2) d'ingénierie, un plan d'automatisation ayant des objets de processus et, au moyen du système (2) d'ingénierie, un dispositif (5) d'automatisation peut être planifié et/ou configuré pour la commande d'un processus technique et dans lequel, en outre, au moyen d'un système (3, 4) opérateur, le processus technique à commander peut être commandé et observé, dans lequel, pour la mise à jour au moins de l'un des objets de processus dans le plan d'automatisation, dans le cas d'une modification du au moins un objet de processus,

- le système (3, 4) opérateur est constitué pour produire une alerte (15) de commande et pour la mettre en mémoire dans une représentation (10) de processus du système (3, 4) opérateur, cette alerte (15) de commande comprenant la modification, ainsi que des valeurs, rapportées à un utilisateur, à une action et/ou à un objet de processus, de protection vis-à-vis de modifications injustifiées du au moins un objet de processus et une caractéristique d'intégrité de protection de l'alerte (15) de commande vis-à-vis de manipulations,
- le système (3, 4) opérateur est constitué, en outre, pour envoyer l'alerte (15) de commande, en outre, à un serveur (7) d'archivage,
- le système (2) d'ingénierie est constitué pour lire l'alerte (15) de commande dans le serveur (7) d'archivage,
- le système (2) d'ingénierie est constitué, en outre, pour vérifier la caractéristique d'intégrité et égaliser les valeurs, rapportées à un utilisateur, à une action et/ou à un objet de processus, à des valeurs données à l'avance mises en mémoire dans le système (2) d'ingénierie, dans lequel, en fonction des résultats de la vérification et de l'égalisation, le système (2) d'ingénierie prend en charge la modification du au moins un objet de processus dans le plan d'automatisation,

**caractérisé en ce que** le système (3, 4) opérateur est constitué pour compléter l'alerte (15) de commande d'une alerte (16) de marqueur, qui indique un regroupement de modifications.

**6.** Agencement suivant la revendication 5, **caractérisé en ce que** le système (2) d'ingénierie est constitué pour accuser réception au serveur (7) d'archivage d'une modification prise en charge dans le plan d'automatisation.

**7.** Agencement suivant la revendication 6, **caractérisé en ce que** le serveur (7) d'archivage est constitué pour indiquer à un client (3) OS du système (3, 4) opérateur une modification, qui n'est pas prise en charge dans le plan d'automatisation.

**8.** Agencement suivant l'une des revendications 5 à 7, **caractérisé en ce que** le système (2) d'ingénierie est constitué pour mettre en mémoire, dans un système (29) SIEM (Security Information and Event Management), tant des modifications prise en charge dans le plan d'automatisation, que non prises en charge dans le projet d'automatisation.

# FIG 1

# FIG 2

FIG 3

Abschnitt

| 2* | 1* | 4 | 3 | 2 | 1 |
|----|----|---|---|---|---|

42    41    40    39    38    37

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1868055 A2

**In der Beschreibung aufgeführte Nicht-Patentliteratur**

- *Das Prozessleitsystem SIMATIC PCS 7,* 2016